# EUROPÄISCHE PATENTSCHRIFT

(11) **EP 3 475 131 B1**
(45) Veröffentlichungstag und Bekanntmachung des Hinweises auf die Patenterteilung: **29.12.2021**
(21) Anmeldenummer: 17716123.9
(22) Anmeldetag: 03.04.2017
(51) Int. Cl.: B60T 7/22, B60T 17/22

(54) **NOTBREMSSYSTEM FÜR EIN FAHRZEUG SOWIE VERFAHREN ZUM STEUERN DES NOTBREMSSYSTEMS**
EMERGENCY BRAKING SYSTEM FOR A VEHICLE AND METHOD FOR CONTROLLING THE EMERGENCY BRAKING SYSTEM
SYSTÈME DE FREINAGE D'URGENCE POUR UN VÉHICULE AINSI QUE PROCÉDÉ DE COMMANDE DU SYSTÈME DE FREINAGE D'URGENCE

(30) Priorität: 23.06.2016 DE 102016007676
(43) Veröffentlichungstag der Anmeldung: 01.05.2019
(73) Patentinhaber: ZF CV Systems Europe BV, 1170 Brussels (BE)
(72) Erfinder: BREUER, Karsten, 88179 Oberreute (DE)
(74) Vertreter: Rabe, Dirk-Heinrich
(86) Internationale Anmeldenummer: PCT/EP2017/000410
(87) Internationale Veröffentlichungsnummer: WO 2017/220177

(56) Entgegenhaltungen:
- DE-A1- 19 729 952
- DE-A1-102006 053 559
- DE-A1-102006 053 561
- US-A- 5 436 835

## Beschreibung

Die Erfindung betrifft ein Notbremssystem für ein Fahrzeug, insbesondere Nutzfahrzeug, sowie ein Verfahren zum Steuern des Notbremssystems.

Bremssysteme in einem Fahrzeug weisen eine Steuereinheit auf, in der ein Parametersatz von Steuerparametern abgelegt ist, mit denen das Bremssystem parametriert ist, d. h. das Bremssystem wird über die Steuerparameter entsprechend abgestimmt. Die Parametrierung erfolgt insbesondere in Abhängigkeit von gesetzlichen Vorgaben, beispielsweise einer Typprüfung gemäß der technischen Vorschrift ECE-R13, die bestimmte Vorgaben für eine mit dem Fahrzeug durchgeführte Bremsung trifft.

Ist das Bremssystem zusätzlich mit einem Notbremssystem (AEBS) ausgestattet, wird gemäß der ECE-R13, insbesondere gemäß 347/2012/ EC vorgegeben, wann der Fahrer vor einer autonom eingeleiteten Notbremsung über eine Warnvorrichtung vorzuwarnen ist, um ggf. noch selbst in den Bremsvorgang eingreifen zu können. Die Vorwarnung erfolgt dabei optisch und zusätzlich z.B. auch akustisch und haptisch zu unterschiedlichen Zeitpunkten bevor die Notbremsung eingeleitet wird, wobei die Zeitpunkte für die Vorwarnungen gemäß der ECE-R13 exakt vorgegeben werden. Weiterhin wird auch vorgegeben, ab welchem Notbremszeitpunkt das Fahrzeug vor einer drohenden Kollision autonom abgebremst werden darf, um insbesondere den nachfolgenden Verkehr nicht zu irritieren und Auffahrunfälle zu vermeiden.

Zum Bestimmen der jeweiligen Zeitpunkte ist demnach von einer Notbrems-Steuereinheit zunächst prädikativ zu ermitteln, wann es voraussichtlich zu einer Kollision kommen wird. Diese prädikative Ermittlung erfolgt hierbei anhand der Parametrierung, d.h. in Abhängigkeit der auf der Notbrems-Steuereinheit abgelegten Steuerparameter. In Abhängigkeit von erfassten Objekten in einer Fahrzeugumgebung wird dazu anhand der Steuerparameter sowie der eigenen Fahrdynamik zunächst eine Kollisionswahrscheinlichkeit mit den erfassten Objekten ermittelt aus der ein Zeitpunkt für eine drohende Kollision folgt.

Gemäß DE 10 2012 002 823 A1 ist beispielsweise vorgesehen, ein Bremssystem mit einer Steuereinheit derartig anzusteuern, dass in Abhängigkeit eines Betriebszustandes das Fahrzeug autonom gesteuert wird, wobei insbesondere Lenkeingriffe als auch Bremseingriffe, insbesondere in Abhängigkeit einer Umgebungserkennung, durchgeführt werden. Die Steuereinheit umfasst hierbei einen Datenspeicher, auf dem insbesondere Steuerparameter gespeichert sein können, die beispielsweise Steuerungs- und Regelungsalgorithmen umfassen. Je nach eingestelltem Betriebszustand können die Steuerparameter von einem Operator über ein externes Eingabesystem verändert werden.

Die DE 10 2006 053 561 B4 beschreibt eine Überprüfung eines Notbremssystems, wobei ein herkömmliches Notbremssystem verwendet wird, das anhand eines Abstandes zu einem vorausfahrenden Objekts permanent eine Verkehrssituation bewertet und bei Erkennen eines möglichen Zusammenstoßes mit dem vorausfahrenden Objekt eine Notbremsung einleitet. Hierbei wird bei Vorliegen einer potentiellen Notbremsung zunächst eine optische oder akustische Warnung an den Fahrer ausgegeben, bevor die Notbremsung eingeleitet wird. Nach einer Zeitspanne wird eine haptische Warnung ausgegeben, die vorzugsweise durch einen ersten leichten Bremseneingriff, der im Fahrzeug als Bremsdruck spürbar ist, erfolgt. Erfolgt nach einer weiteren Zeitspanne immer noch kein Fahrereingriff, wird die automatische Notbremsung vollständig eingeleitet, so dass eine Kollision gerade noch vermieden werden kann.

Nachteilig hierbei ist, dass die Vorwarnungen sowie die Notbremsung anhand von vorab festgelegten Steuerparametern ausgeführt werden, die auf eine Fahrzeugvariante abgestimmt sind, die innerhalb einer Baureihe am schlechtesten bremst, um zu gewährleisten, dass gesetzliche Vorschriften für diese Baureihe auf jeden Fall eingehalten werden können. D.h. die Steuerparameter werden in Abhängigkeit einer geringen Bremsperformance bzw. einer geringen Leistungsfähigkeit des Bremssystems festgelegt. Somit wird bei einem gut bremsenden Fahrzeug dieser Baureihe im Notbremsfall auf einen Kollisionszeitpunkt reagiert, der anhand von Steuerparametern für ein schlecht bremsendes Fahrzeug dieser Baureihe berechnet wurde, so dass zum einen die Vorwarnung für ein gut bremsendes Fahrzeug bereits sehr früh ausgegeben und auch eine autonome Notbremsung ggf. zu früh eingeleitet wird. Insbesondere die Vorwarnung kann vom Fahrer als Fehlwarnung interpretiert werden, wenn er bemerkt, dass diese häufig zu früh erfolgt. Dadurch sinkt die Akzeptanz für ein derartiges autonom gesteuertes Bremssystem und der Fahrer nimmt auch bei korrekterweise ausgegebenen Vorwarnungen an, dass es sich um eine Fehlwarnung handelt; die Sicherheit im Notbremsfall sinkt.

Die US 5,436,835 offenbart ein Verfahren zum Bestimmen eines sicheren Anhaltewegs für ein Kraftfahrzeug mit folgenden Merkmalen: Speichern von Gewichtungsfaktoren, die einem Bereich von Fahrzeugparametern und Fahrbedingungen entsprechen, in einer Rechenvorrichtung und manuelle Eingabe von tatsächlichen Fahrzeugparametern und Fahrbedingungen und einer gewünschten Fahrgeschwindigkeit in die Rechenvorrichtung. Die Rechenvorrichtung berechnet einen vorgeschlagenen sicheren Anhalteabstand aus den Gewichtungsfaktoren, den eingegebenen Fahrzeugparametern und Fahrbedingungen und der gewünschten Fahrgeschwindigkeit und zeigt diesen auf einem Display an.

Gemäß DE 10 2008 040 366 A1 ist dazu vorgesehen, in einem ESP- bzw. ABS-System Steuerungsparameter in einem EEPROM-Speicher derartig abzulegen, dass das Bremssystem in Abhängigkeit die aktuelle Fahrzeugvariante parametriert werden kann. Demnach werden in dem EEPROM-Speicher mehrere Parametersätze von Steuerparametern hinterlegt und die entsprechenden Steuerparameter, die einer aktuellen Fahrzeugvariante entsprechen, aus dem EEPROM-Speicher in einen RAM-Speicher einer Rechnereinheit des Bremssystems geladen, so dass die Funktionskomponenten des Fahrzeuges, d. h. insbesondere die Bremsen des Bremssystems, bei Vorliegen eines ABS- oder ESP-Falles mit den geladenen Steuerparametern angesteuert werden können. Somit werden zunächst Steuerparameter für alle denkbaren Fahrzeugvarianten in einer Speichereinheit vorab gespeichert und das Fahrzeug während des Betriebs mit den eingelesenen Steuerparameter für die aktuelle Fahrzeugvariante gesteuert.

Aufgabe der Erfindung ist, ein Notbremssystem bereitzustellen, mit dem eine Notbremsung sicher und zuverlässig durchgeführt werden kann. Weiterhin ist Aufgabe der Erfindung, ein Verfahren zum Steuern des Notbremssystems bereitzustellen.

Diese Aufgabe wird durch ein Notbremssystem nach Anspruch 1 sowie ein Verfahren nach Anspruch 7 gelöst. Vorteilhafte Weiterbildungen sind in den Unteransprüchen angegeben.

Erfindungsgemäß ist demnach vorgesehen, in einem Notbremssystem aus mehreren Parametersätzen von Steuerparametern einen Parametersatz auszuwählen, der das Notbremssystem auf eine tatsächlich vorliegende Fahrzeugvariante mit einem entsprechend ausgelegten Bremssystem, in dem das Notbremssystem vorgesehen ist, abstimmt. Dazu kann erfindungsgemäß von einer Notbrems-Steuereinheit des Notbremssystems aus mehreren bereitgestellten Parametersätzen ein der aktuell vorliegenden Fahrzeugvariante zugeordneter Parametersatz abgerufen werden, in dessen Abhängigkeit die Notbrems-Steuereinheit das Notbremssystem steuert, wobei darunter verstanden wird, dass die Notbrems-Steuereinheit seine Berechnungen insbesondere bezüglich einer Kollisionswahrscheinlichkeit und die daraus folgende Ausgabe von Warnsignalen sowie die Anforderung einer autonomen Bremsung in Abhängigkeit dieses ausgewählten Parametersatzes durchführt.

Dadurch kann vorteilhafterweise bereits erreicht werden, dass das Notbremssystem auf die tatsächlich vorliegende, aktuelle Fahrzeugvariante abgestimmt wird, wobei die Auswahl des Parametersatzes erst bei Kenntnis der Fahrzeugvariante, vorteilhafterweise vom Hersteller des Fahrzeuges selbst, erfolgen kann. Somit stellt der Hersteller des Notbremssystems mehrere Parametersätze bereit, aus denen dann vom Hersteller des Fahrzeuges der zu dem tatsächlichen Fahrzeug passende Parametersatz ausgewählt werden kann. Dadurch können die Berechnungen insbesondere der Kollisionswahrscheinlichkeit und daraus folgende Zeitpunkte für eine Vorwarnung sowie ein Notbremszeitpunkt für eine Anforderung einer autonomen Bremsung exakter anhand von tatsächlich vorliegenden Werten für das entsprechend verwendete Bremssystem stattfinden. Die Sicherheit im Fahrzeug steigt aufgrund einer zuverlässigen Steuerung des Notbremssystems.

Die mehreren Parametersätze sind jeweils einer bestimmten Fahrzeugvariante, vorzugsweise einer Fahrzeugvariante innerhalb einer bestimmten Baureihe, zugeordnet, so dass vom Hersteller des Notbremssystem lediglich eine begrenzte Anzahl an Parametersätzen für die möglichen Fahrzeugvarianten einer Baureihe bereitzustellen sind, wodurch die Datenmenge optimiert werden kann. Der Hersteller des Fahrzeuges kann dann innerhalb der Baureihe durch unterschiedliche Auslegung des Bremssystems, beispielsweise einer Leistungsfähigkeit des Bremssystems oder einer Bauart des Fahrzeuges, unterschiedliche Fahrzeugvarianten anbieten und das Notbremssystem durch Auswahl des entsprechenden Parametersatzes in einfacher Weise selbst auf diese Auslegung des Bremssystems abstimmen.

Die Leistungsfähigkeit des Bremssystems kann hierbei vorteilhafterweise in minimal, normal und sehr gut klassifiziert werden, so dass eine einfache Unterteilung innerhalb von festgelegten Grenzen beispielsweise für die Bremskraft ermöglicht wird. Weiterhin kann das Bremssystem beispielsweise über die Bauart des Nutzfahrzeuges charakterisiert werden, d.h. beispielsweise in Abhängigkeit einer Achskonfiguration, d.h. der Anzahl der Räder sowie der angetriebenen Räder des Fahrzeuges, wobei beispielsweise eine 4x2 Achskonfiguration, d.h. zwei angetriebene Räder bei insgesamt vier Rädern, oder eine 6x2 Achskonfiguration, d.h. zwei angetriebene Räder bei insgesamt sechs Rädern, vorliegen kann. Zusätzlich kann in der Achskonfiguration auch die Möglichkeit einer Liftachse, d.h. einer Fahrzeugachse mit Rädern, die bei einer bestimmten Beladung von der Straße abgehoben werden und somit nicht mehr zum Bremsen beitragen, berücksichtigt werden. Die Bauart kann beispielsweise auch unterteilt werden in einen Fahrzeugtyp, beispielsweise einen LKW mit oder ohne Anhänger oder einem Sattelzug mit Anhänger oder einen Traktor oder einen Bus.

Somit kann die Auslegung des Bremssystems durch eine Vielzahl von Eigenschaften des Fahrzeuges beeinflusst werden, wobei diese Eigenschaften bei der Auswahl des Parametersatzes zu berücksichtigten sind. Denn davon hängt insbesondere die Berechnung der Zeit bis zu einer Kollision (time to collision, TTC) und somit auch der Kollisionswahrscheinlichkeit ab, d.h. ob das Fahrzeug mit einem derartig ausgelegten Bremssystems vor einem Objekt noch rechtzeitig abgebremst werden kann.

Auch die gesetzlich vorgegebenen Zeitpunkte für auszugebende Warnsignale vor Einleitung einer Notbremsung durch unterschiedliche Warneinrichtungen, die beispielsweise gemäß der ECE-R13, insbesondere der Typprüfung gemäß 347/2012/EC, vorgegeben sind, sind von diesen Eigenschaften des Fahrzeuges bzw. des Bremssystems abhängig. Demnach ist zu einem ersten Zeitpunkt vor Einleitung einer autonomen Notbremsung ein nicht lediglich optisches, beispielsweise ein optisches und akustisches Warnsignal auszugeben und zu einem zweiten Zeitpunkt vor Einleitung einer autonomen Notbremsung ein nicht lediglich optisches, beispielsweise ein optisches und haptisches Signal. Da die Zeitpunkte an den Notbremszeitpunkt zum Auslösen einer autonomen Bremsanforderung gekoppelt sind, sind auch diese abhängig vom gewählten Parametersatz.

Somit kann die Notbremsung vorteilhafterweise sicher und zuverlässig ausgeführt werden, da gesetzlich vorgegebene Zeitpunkte eingehalten werden und diese Zeitpunkte auf das tatsächlich vorliegende Bremssystem angepasst sind, so dass dadurch auch keine zu frühen Vorwarnungen ausgegeben werden, die vom Fahrer als Falschmeldungen wahrgenommen werden können; die Akzeptanz für das Notbremssystem steigt.

Die mehreren Parametersätze können beispielsweise in einer Speichereinheit abgelegt sein, auf die die Notbrems-Steuereinheit des Notbremssystems Zugriff hat. Die Parametersätze können bereits vom Hersteller des Notbremssystems auf der Speichereinheit gespeichert werden, wobei die Speichereinheit dann bereits Teil des Notbremssystems sein kann. Alternativ können die Parametersätze auch nachträglich auf eine beliebige Speichereinheit im Fahrzeug übertragen werden, wenn beispielsweise das Notbremssystem nachgerüstet wird.

Vorteilhafterweise ist jedem Parametersatz eine einzigartige Kennung zugeordnet, wobei die Kennung in eindeutiger Weise eine Auslegung des Bremssystems, d.h. die Leistungsfähigkeit des Bremssystems bzw. die Bauart der Fahrzeugvariante einer Baureihe charakterisiert. Dadurch kann über die Kennung in einfacher Weise ein auf die entsprechende Fahrzeugvariante zugeschnittener Parametersatz ausgewählt werden, indem beispielsweise durch den Hersteller des Fahrzeuges die Auslegung des Bremssystems angegeben wird und die Notbrems-Steuereinheit dann automatisch ein Parametersatz mit dieser Kennung auswählt, so dass die Notbrems-Steuereinheit entsprechend diesem Parametersatz das Notbremssystem steuern kann.

Weiterhin können gesetzliche Vorgaben bezüglich einer zu erfüllenden Fahrzeug-Ist-Verzögerung und eines Geschwindigkeitsabbaus vor und während der Notbremsung berücksichtigt werden, wobei dies ebenfalls in Abhängigkeit des ausgewählten Parametersatzes erfolgt.

Die Erfindung wird im Folgenden anhand eines Ausführungsbeispiels näher erläutert. Es zeigen:
- Fig. 1: ein Nutzfahrzeug mit einem Notbremssystem; und

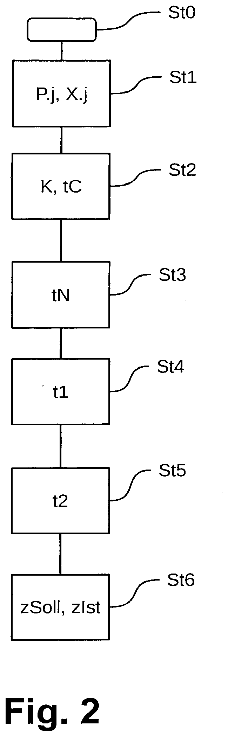

- Fig. 2: ein Flussdiagramm zur Durchführung des Verfahrens.

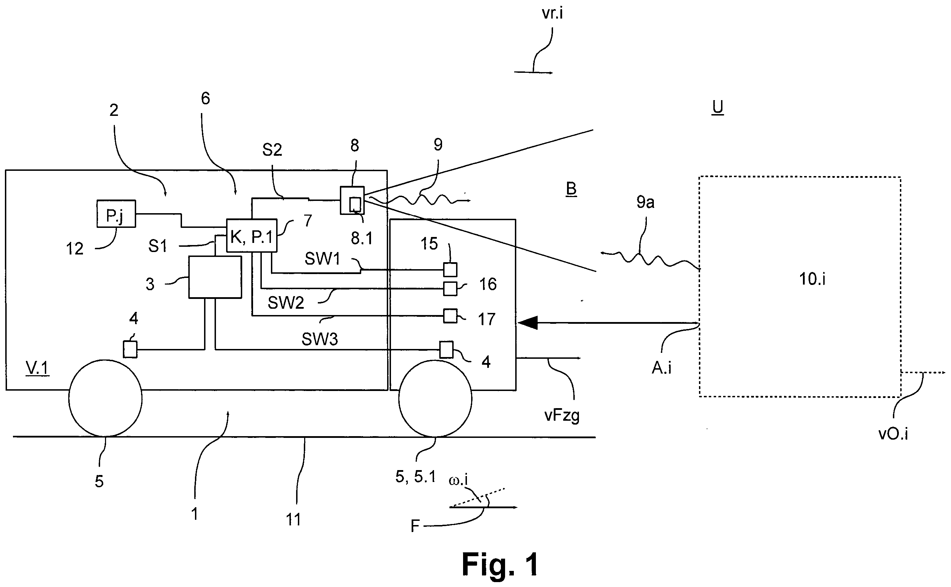

Gemäß Fig. 1 ist ein Fahrzeug 1, insbesondere ein Nutzfahrzeug, dargestellt, das ein Bremssystem 2, insbesondere ein elektrisch gesteuertes pneumatisches, elektrisches oder hydraulisches Bremssystem, aufweist. Im Bremssystem 2 sind Betriebsbremsen 4 vorgesehen, die gesteuert von einer Brems-Steuereinheit 3 die Räder 5 des Fahrzeuges 1 abbremsen können, um das Fahrzeug 1 zu verzögern. Als Teil des Bremssystems 2 ist weiterhin ein Notbremssystem 6 mit einer Notbrems-Steuereinheit 7 vorgesehen, wobei die Notbrems-Steuereinheit 7 gemäß diesem Ausführungsbeispiel als externe Notbrems-Steuereinheit 7 mit der Brems-Steuereinheit 3 verbunden ist und Notbrems-Signale S1 austauschen kann. Das Bremssystem 2 des Fahrzeuges 1 ist derartig ausgelegt, dass eine erste Fahrzeugvariante V.1 innerhalb einer bestimmten Baureihe ausgebildet wird, wobei der ersten Fahrzeugvariante V.1 eine erste Kennung X.1 zugeordnet ist.

Die Notbrems-Steuereinheit 7 ist ausgebildet, in Abhängigkeit eine Kollisionswahrscheinlichkeit K, die insbesondere aus einer Zeit tC bis zu einer Kollision (time to collision, TTC) sowie der Auslegung des Bremssystems 2 folgt, eine Notbremsung zu veranlassen, indem sie bei Erkennen einer drohenden Notbremssituation zu einem Notbremszeitpunkt tN ein entsprechendes Notbrems-Signal S1 an die Brems-Steuereinheit 3 ausgibt, die daraufhin eine Bremsung veranlasst, so dass das Fahrzeug 1 abgebremst wird. Die Notbremsung wird hierbei autonom, d.h. ohne dass der Fahrer eingreifen muss, herbeigeführt. Ergänzend wird in Abhängigkeit der Unfallwahrscheinlichkeit K ein erstes Warnsignal SW1 an eine erste Warneinrichtung 15, ein zweites Warnsignal SW2 an eine zweite Warneinrichtung 16 und ein drittes Warnsignal SW3 an eine dritte Warneinrichtung 17 ausgegeben, um den Fahrer des Fahrzeuges 1 vorab vor einer drohenden Notbremssituation warnen zu können. Die erste Warneinrichtung 15 ist hierbei beispielsweis eine optische Warneinrichtung, die zweite Warneinrichtung 16 eine akustische Warneinrichtung und die dritte Warneinrichtung 17 eine haptische Warneinrichtung. Die Ausgabe der Warnsignale SW1, SW2, SW3 erfolgt gemäß gesetzlicher Vorgabe in Kombination, d.h. es wird beispielsweise gleichzeitig ein optisches und eine akustisches Signal oder ein optisches und haptisches Signal ausgegeben. Der Fahrer kann dann ggf. noch selbst eine Bremsung des Fahrzeuges 1 veranlassen und/oder eine Lenkung einleiten.

Zum Erkennen der Notbremssituation in Abhängigkeit der Kollisionswahrscheinlichkeit K nimmt die Notbrems-Steuereinheit 7 Sensor-Signale S2 eines Umgebungserfassungs-Systems 8 auf und verarbeitet diese. Das Umgebungserfassungs-System 8 weist gemäß dieser Ausführungsform einen Sensor 8.1, beispielsweise einen Radarsensor oder einen LIDAR-Sensor, auf und strahlt elektromagnetische Strahlung 9 in ein vor dem Fahrzeug 1 bzw. in einer Fahrtrichtung F liegendes Umfeld U ab, wobei die elektromagnetische Strahlung 9 in einem Winkelbereich B abgestrahlt wird, so dass das Umfeld U in einem Winkelbereich B überwacht werden kann.

Die elektromagnetische Strahlung 9 wird an einem Objekt 10.i vor dem Fahrzeug 1 derartig reflektiert, dass ein Teil der von dem Objekt 10.i reflektierten elektromagnetischen Strahlung 9a wieder zum Umgebungserfassungs-System 8 zurückgeworfen wird. Das Umgebungserfassungs-System 8 detektiert diesen Teil der reflektierten elektromagnetischen Strahlung 9a und wertet diesen aus, beispielsweise durch einen Vergleich der abgestrahlten elektromagnetischen Strahlung 9 im Winkelbereich B mit der reflektierten elektromagnetischen Strahlung 9a. Aus der Auswertung kann insbesondere auf einen Abstand A.i zum Objekt 10.i, einen Winkel ω.i zum Objekt 10.i bezüglich der Fahrtrichtung F des Fahrzeuges 1 sowie aus einer Dopplereffektmessung auf eine Relativgeschwindigkeit vr.i des Objektes 10.i relativ zum eigenen Fahrzeug 1 geschlossen werden. Aus der Relativgeschwindigkeit vr.i zum Objekt 10.i kann über eine Fahrzeuggeschwindigkeit vFzg des eigenen Fahrzeuges 1 eine entsprechende Objekt-Geschwindigkeit vO.i des Objektes 10 hergeleitet werden.

Somit kann durch das Umgebungserfassungs-System 8 das Umfeld U in dem Winkelbereich B vor dem Fahrzeug 1 über die elektromagnetische Strahlung 9 abgescannt und der Abstand A.i, der Winkel ω.i sowie die Relativgeschwindigkeit vr.i für jedes erkannte Objekt 10.i bestimmt und dem jeweiligen Objekt 10.i zugeordnet in der Notbrems-Steuereinheit 7 abgespeichert werden. Diese Informationen können für das Objekt 10.i abgespeichert werden, so dass in einfacher Weise die zeitliche Bewegung des Objektes 10.i und damit die zeitliche Änderung der Daten, wie z.B. Abstand A.i, der Winkel ω.i sowie die Relativgeschwindigkeit vr.i, beobachtet werden können.

Mit diesen Informationen zu dem erfassten Objekt 10.i kann die Notbrems-Steuereinheit 7 dann eine Kollisionswahrscheinlichkeit K für das eigene Fahrzeug 1 mit dem erfassten Objekt 10.i berechnen und entscheiden, ob eine Notbremssituation vorliegt. Zur Berechnung der Kollisionswahrscheinlichkeit K wird beispielsweise berücksichtigt, ob das eigene Fahrzeug 1 mit der aktuellen Relativgeschwindigkeit vr.i und dem aktuellen Abstand A.i noch rechtzeitig bremsen kann, ohne dass es zu einer Kollision mit Personenschäden mit dem Objekt 10.i kommt, d.h. es wird die Zeit tC bis zu einer möglichen Kollision ermittelt und anhand der Auslegung des Bremssystems 2 abgeschätzt, ob das Fahrzeug 1 noch abgebremst werden kann.

Zur Berechnung der Kollisionswahrscheinlichkeit K wird dabei eine Parametrierung des Bremssystems 2 berücksichtigt, d.h. es wird ein erster Parametersatz P.1 an Steuerparametern angenommen, wobei dieser erste Parametersatz P.1 auf das aktuell vorliegenden Bremssystems 2 für das eigene Fahrzeug, d.h. auf die erste Fahrzeugvariante V.1, angepasst ist.

Um eine auf die Fahrzeugvariante V.j abgestimmte Parametrierung zu gewährleisten, werden durch den Hersteller des Notbremssystems 6 zunächst mehrere Parametersätze P.j bereitgestellt, beispielsweise auf einer Speichereinheit 12, wobei die mehreren Parametersätze P.j jeweils für Fahrzeugvarianten V.j innerhalb einer Baureihe mit unterschiedlich ausgelegten Bremssystemen gelten. Aus diesen bereitgestellten Parametersätzen P.j wird dann beispielsweise vom Hersteller des Fahrzeuges 1 für die aktuelle Fahrzeugvariante V.j der entsprechend zugeordnete Parametersatz P.j ausgewählt. Die Auswahl des entsprechenden Parametersatzes P.j erfolgt über eine Kennung X.j, d.h. für die erste Fahrzeugvariante V.1 gemäß Fig.1, der eine erste Kennung X.1 zugeordnet ist, wird der erste Parametersatz P.1 abgerufen, dem ebenfalls die erste Kennung X.1 zugeordnet ist.

Die Kennung X.j charakterisiert hierbei die Auslegung des jeweiligen Bremssystems, wobei diese Auslegung beispielsweise durch eine Leistungsfähigkeit des jeweiligen Bremssystems oder aber durch eine Bauart des jeweiligen Fahrzeuges bestimmt sein kann. Hierbei kommen insbesondere eine minimale, eine normale oder eine sehr gute Leistungsfähigkeit in Frage, die beispielsweise durch die Auslegung einer Bremskraft des Fahrzeuges bestimmt ist. Die Bauart kann in Abhängigkeit der Achskonfiguration, d.h. der Anzahl der Räder sowie der angetriebenen Räder des Fahrzeuges 1 bestimmt sein, wobei beispielsweise für die erste Fahrzeugvariante V.1 gemäß Fig. 1 eine 4x2 Achskonfiguration vorgesehen ist, d.h. zwei angetriebene Räder 5.1 bei insgesamt vier Rädern 5. Es ist aber beispielsweise auch eine 6x2 Achskonfiguration mit zwei angetriebenen Rädern bei insgesamt sechs Rädern möglich, bei der zusätzlich eine Liftachse vorgesehen sein kann. Die Bauart kann weiterhin unterteilt werden in einen Fahrzeugtyp, d.h. einen LKW oder einen Sattelzug mit Anhänger oder einen Traktor oder einen Bus.

Anhand der ermittelten Kollisionswahrscheinlichkeit K für die erste Fahrzeugvariante V.1 unter Berücksichtigung des ersten Parametersatzes P.1 bzw. der prädikativen Abschätzung, wann es zu einer Kollision kommen wird, werden dann zu unterschiedlichen Zeitpunkten t1, t2 zunächst die Warnsignale WS1, WS2, WS3 ausgegeben und anschließend zu dem Notbremszeitpunkt tN über das Notbrems-Signal S1 eine Anforderung für eine autonome Notbremsung an die Brems-Steuereinheit 3 ausgegeben, sobald das Fahrzeug 1 innerhalb der Zeit tC bis zur Kollision gerade noch rechtzeitig abgebremst werden kann bzw. die entsprechenden Unfallfolgen z.B. mit Personenschäden vermieden werden können.

Die Ausgabe der Warnsignale SW1, SW2, SW3 erfolgt insbesondere gemäß der Vorgabe der Richtlinie ECE-R13 bzw. 347/2012/EC. Demnach ist festgelegt, dass zu einem ersten Zeitpunkt t1, der mindestens 1,4s vor der Einleitung einer autonomen Notbremsung zu dem Notbremszeitpunkt tN liegt, eine optische und beispielsweise eine akustische Warnung an den Fahrer auszugeben sind, was über die erste und zweite Warneinrichtung 15, 16 erfolgt. Weiterhin ist vorgegeben, dass zu einem zweiten Zeitpunkt t2, der mindestens 0,8s vor der Einleitung der autonomen Notbremsung zu dem Notbremszeitpunkt tN liegt, zusätzlich eine haptische Warnung über die dritte Warneinrichtung 17 an den Fahrer zu erfolgen hat. Die autonome Notbremsung soll weiterhin zu dem Notbremszeitpunkt tN erst dann erfolgen, wenn der Zeitpunkt tC bis zu einer Kollision maximal 3s beträgt. Diese drei Zeitpunkte t1, t2, tN werden hierbei insbesondere in Abhängigkeit des ersten Parametersatzes P.1 für das Fahrzeug 1 bestimmt, so dass eine Notbremsung mit den entsprechenden Warnsignalen SW1, SW2, SW3 mit den gesetzlichen Vorgaben zuverlässig eingeleitet werden kann.

Als weitere gesetzliche Vorgaben werden berücksichtigt, dass während der Warnphase, d. h. vor dem Einleiten der autonomen Notbremsung, maximal 15 km/h oder 30% der Relativgeschwindigkeit vr zwischen dem eigenen Fahrzeug 1 und dem vorausliegenden Objekt 10.i abgebaut werden. Nach Einleitung der Notbremsung ist ein Geschwindigkeitsabbau von mindestens 20km/h gefordert. Beide Vorgaben bezüglich des Geschwindigkeitsabbaus werden in Abhängigkeit des ersten Parametersatzes P.1 durchgesetzt. Zudem wird die autonome Notbremsung mit einer Fahrzeug-Soll-Verzögerung zSoll durchgeführt, die eine Fahrzeug-Ist-Verzögerung zlst von mindestens - 4 m/s² zur Folge hat, wobei die Einstellung der Fahrzeug-Soll-Verzögerung zSoll gemäß dieser Vorgabe in Abhängigkeit des ersten Parametersatzes P.1 erfolgt.

Das erfindungsgemäße Verfahren kann beispielsweise wie folgt durchgeführt werden.

In einem anfänglichen Schritt St0 wird das Notbremssystem 6 initialisiert, beispielsweise nach einem Einbau des Notbremssystems 6 in ein Fahrzeug 1 einer ersten Fahrzeugvariante V.1.

In einem ersten Schritt St1 wird aus mehreren bereitgestellten Parametersätzen P.j ein auf die eigene erste Fahrzeugvariante V.1 abgestimmter erster Parametersatz P.1 ausgewählt und in der Notbrems-Steuereinheit 7 abgelegt.

Die Auswahl kann hierbei anhand einer Kennung X.j erfolgen, die sowohl dem jeweiligen Parametersatz P.j als auch der Fahrzeugvariante V.j zugeordnet ist und die die Fahrzeugvariante V.j charakterisiert, d.h. insbesondere angibt, wie leistungsfähig das eigene Bremssystem 2 ist und welche Bauart die Fahrzeugvariante V.j aufweist.

Anhand des ausgewählten ersten Parametersatzes P.1 wird in einem zweiten Schritt St2, der dann während einer Fahrt erfolgt, eine Kollisionswahrscheinlichkeit K ermittelt, wobei dies insbesondere beinhaltet, eine Zeit tC bis zu einer Kollision unter Berücksichtigung der Auslegung des Bremssystems 2 dieser Fahrzeugvariante V.j zu bestimmen.

Die dadurch errechnete Zeit tC bis zu einer Kollision gibt somit vorteilhafterweise die tatsächliche, für die aktuell vorliegende Fahrzeugvariante gültige Zeit tC bis zu einer Kollision an, da die Berechnung über den Parametersatz P.1 anhand von tatsächlich vorliegenden Werten für das entsprechend verwendete Bremssystem stattgefunden hat. Dementsprechend wird zur Berechnung der Kollisionswahrscheinlichkeit K für das eigene Fahrzeug 1 mit dem erfassten Objekt 10.i berücksichtigt, ob das eigene Fahrzeug 1 mit der aktuellen Relativgeschwindigkeit vr.i und dem aktuellen Abstand A.i und dem aktuell über den Parametersatz P.1 charakterisierten Bremssystem noch rechtzeitig bremsen kann, d.h. der Abstand A.i noch ausreichend ist, ohne dass es innerhalb der Zeit tC zu einer Kollision mit Personenschäden mit dem Objekt 10.i kommt. Somit wird der Berechnung nicht mehr das am schlechtesten bremsende Bremssystem zugrunde gelegt sondern das tatsächliche, wodurch die Sicherheit im Fahrzeug aufgrund einer zuverlässigen Steuerung des Notbremssystems steigt.

In einem dritten Schritt St3 wird anhand der Kollisionswahrscheinlichkeit K bzw. der Zeit tC bis zu einer Kollision sowie unter Berücksichtigung des ausgewählten ersten Parametersatzes P.1 zunächst ein Notbremszeitpunkt tN bestimmt, zu dem eine autonome Notbremsung einzuleiten ist, wobei der Notbremszeitpunkt tN maximal 3s vor der Zeit tC bis zu einer Kollision liegt, d.h. *tN* ≅ *tC* ≤ 3*s.*

In einem vierten Schritt St4 wird in Abhängigkeit des Notbremszeitpunktes tN ein erster Zeitpunkt t1 bestimmt, der gesetzliche Vorgaben berücksichtigt und zu dem eine optische und eine akustische Warnung an den Fahrer erfolgt. Dieser erste Zeitpunkt t1 liegt beispielsweise 1,4s vor der Einleitung einer Notbremsung, d.h. 1,4s vor dem Notbremszeitpunkt tN. In einem vierten Schritt St4 wird nach demselben Prinzip der zweite Zeitpunkt t2 bestimmt, zu dem eine optische und eine haptische Warnung an den Fahrer erfolgen. Dieser zweite Zeitpunkt t2 liegt beispielsweise 0,8s vor der Einleitung der Notbremsung zum Notbremszeitpunkt tN.

In einem sechsten Schritt St6 wird die für die autonome Bremsung anzufordernde Fahrzeug-Soll-Verzögerung zSoll unter Berücksichtigung des ausgewählten Parametersatzes P.j ermittelt, wobei aus dieser einer Fahrzeug-Ist-Verzögerung zlst von mehr als -4m/s² folgt. Bei der Festlegung der Fahrzeug-Soll-Verzögerung zSoll wird weiterhin berücksichtigt, dass die Fahrzeuggeschwindigkeit vFzg bei der Durchführung der Notbremsung um mindestens 20km/h abgebaut wird, um gesetzliche Vorgabe einzuhalten, wobei dafür ebenfalls der ausgewählte Parametersatz P.j berücksichtigt wird.

### Bezugszeichenliste (Bestandteil der Beschreibung)

- 1: Fahrzeug
- 2: Bremssystem
- 3: Brems-Steuereinheit
- 4: Betriebsbremsen
- 5: Räder
- 5.1: angetriebene Räder
- 6: Notbremssystem
- 7: Notbrems-Steuereinheit
- 8: Umgebungserfassungs-System
- 8.1: Sensor, Radars-Sensor, LIDAR-Sensor
- 9: elektromagnetische Strahlung
- 9a: reflektierte elektromagnetische Strahlung
- 10.i: Objekt
- 12: Speichereinheit
- 15: erste Warneinrichtung
- 16: zweite Warneinrichtung
- 17: dritte Warneinrichtung

- A.i: Abstand
- B: Winkelbereich
- F: Fahrtrichtung
- K: Kollisionswahrscheinlichkeit
- P.j: Parametersatz
- S1: Notbrems-Signal
- S2: Sensor-Signal
- SW1: erstes Warnsignal (optisch)
- SW2: zweites Warnsignal (akustisch)
- SW3: drittes Warnsignal (haptisch)
- t1: erster Zeitpunkt
- t2: zweiter Zeitpunkt
- tC: Zeit bis zur Kollision
- tN: Notbremszeitpunkt
- U: Umfeld
- vFzg: Fahrzeuggeschwindigkeit
- vO.i: Objekt-Geschwindigkeit
- vr.i: Relativgeschwindigkeit
- V.j: Fahrzeugvariante
- ω.i: Winkel
- X.j: Kennung
- zSoll: Fahrzeug-Soll-Verzögerung
- zlst: Fahrzeug-Ist-Verzögerung

- St1, St2, St3, St4, St5, St6: Schritte des Verfahrens

## Patentansprüche

1. Notbremssystem (6) für ein Fahrzeug (1), insbesondere Nutzfahrzeug, wobei das Notbremssystem (6) eine Notbrems-Steuereinheit (7) zum Steuern des Notbremssystems (6) in Abhängigkeit eines Parametersatzes (P.1) aufweist, **dadurch gekennzeichnet, dass**
von der Notbrems-Steuereinheit (7) aus mehreren Parametersätzen (P.j) ein Parametersatz (P.1) zum Steuern des Notbremssystems (6) auswählbar ist, wobei die mehreren Parametersätze (P.j) jeweils einer Fahrzeugvariante (V.j) zugeordnet sind und der jeweilige Parametersatz (P.j) das Notbremssystem (6) auf die jeweilige Fahrzeugvariante (V.j) abstimmt,
wobei die Fahrzeugvariante (V.j) durch eine Auslegung eines Bremssystems (2) der jeweiligen Fahrzeugvariante (V.j) charakterisiert ist zum Anpassen des Notbremssystems (6) der jeweiligen Fahrzeugvariante (V.j) an die Auslegung des Bremssystems (2) dieser Fahrzeugvariante (V.j),
wobei von der Notbrems-Steuereinheit (7) ein Parametersatz (P.1) ausgewählt wird, der der Fahrzeugvariante (V.1) zugeordnet ist, die das aktuell vorliegende Fahrzeug (1) charakterisiert.

2. Notbremssystem (6) nach Anspruch 1, **dadurch gekennzeichnet, dass** die mehreren Parametersätze (P.j) auf einer Speichereinheit (12) gespeichert sind und die Speichereinheit mit der Notbrems-Steuereinheit (7) verbunden ist.

3. Notbremssystem (6) nach Anspruch 2, **dadurch gekennzeichnet, dass** die Speichereinheit (12) in der Notbrems-Steuereinheit (7) integriert ist.

4. Notbremssystem (6) nach einem der vorhergehenden Ansprüche, **dadurch gekennzeichnet, dass** die Parametersätze (P.j) jeweils eine Kennung (X.j) aufweisen, wobei die Kennung (X.j) die Fahrzeugvariante (V.j) charakterisiert zum Auswählen eines auf die Fahrzeugvariante (V.j) abgestimmten Parametersatzes (P.j).

5. Notbremssystem (6) nach einem der vorhergehenden Ansprüche, **dadurch gekennzeichnet, dass** die Auslegung des Bremssystems (2) durch eine Leistungsfähigkeit des Bremssystems (2) charakterisiert ist, insbesondere eine geringe Leistungsfähigkeit, eine normale Leistungsfähigkeit oder eine sehr gute Leistungsfähigkeit, wobei die Leistungsfähigkeit insbesondere durch eine Bremskraft bestimmt ist.

6. Notbremssystem (6) nach einem der vorhergehenden Ansprüche, **dadurch gekennzeichnet, dass** die Auslegung des Bremssystems (2) durch eine Bauart des Fahrzeuges (1) charakterisiert ist, insbesondere einer Achskonfiguration, beispielsweise einer 4x2-Achskonfiguration oder einer 6x2-Achskonfiguration, oder eines Fahrzeugtyps, beispielsweise eines LKW (1) oder einer Sattelzugmaschine mit Anhänger oder eines Traktors oder eines Busses.

7. Verfahren zum Steuern eines Notbremssystems (6), insbesondere nach einem der Ansprüche 1 bis 6, in einem Fahrzeug (1), insbesondere Nutzfahrzeug, mit mindestens den folgenden Schritten:
Auswählen eines Parametersatzes (P.1) aus mehreren Parametersätzen (P.i), wobei die Parametersätze (P.j) jeweils einer Fahrzeugvariante (V.i) zugeordnet sind und der jeweilige Parametersatz (P.j) das Notbremssystem (6) auf die jeweilige Fahrzeugvariante (V.j) abstimmt und wobei die Fahrzeugvariante (V.j) durch eine Auslegung eines Bremssystems (2) der jeweiligen Fahrzeugvariante (V.j) charakterisiert ist zum Anpassen des Notbremssystems (6) der jeweiligen Fahrzeugvariante (V.j) an die Auslegung des Bremssystems (2) dieser Fahrzeugvariante (V.j),
wobei ein Parametersatz (P.1) ausgewählt wird, der der Fahrzeugvariante (V.1) zugeordnet ist, die das aktuell vorliegende Fahrzeug (1) charakterisiert (St1);
Ermitteln einer Kollisionswahrscheinlichkeit (K) in Abhängigkeit des ausgewählten Parametersatzes (P.1) (St2); und
Ausgeben von Warnsignalen (SW1, SW2, SW3) sowie von Notbrems-Signalen (S1) in Abhängigkeit der ermittelten Kollisionswahrscheinlichkeit (K) (St3, St4, St5, St6);

8. Verfahren nach Anspruch 7, **dadurch gekennzeichnet, dass** der Parametersatz (P.1) in Abhängigkeit einer eindeutigen, die aktuelle Fahrzeugvariante (V.1) charakterisierenden Kennung (X.1) ausgewählt wird.

9. Verfahren nach Anspruch 7 oder 8, **dadurch gekennzeichnet, dass** in Abhängigkeit des ausgewählten Parametersatzes (P.1) eine Zeit (tc) bis zu einer Kollision ermittelt wird und in Abhängigkeit dessen ein Notbremszeitpunkt (tN) bestimmt wird, zu dem das Notbrems-Signal (S1) zum Einleiten einer autonomen Notbremsung ausgegeben wird.

10. Verfahren nach Anspruch 9, **dadurch gekennzeichnet, dass** in Abhängigkeit des Notbremszeitpunktes (tN) und unter Berücksichtigung des ausgewählten Parametersatzes (P.1) ein erster Zeitpunkt (t1) bestimmt wird zum Ausgeben einer Warnung an den Fahrer in Abhängigkeit eines Warnsignals (SW1, SW2).

11. Verfahren nach Anspruch 9 oder 10, **dadurch gekennzeichnet, dass** in Abhängigkeit des Notbremszeitpunktes (tN) und unter Berücksichtigung des ausgewählten Parametersatzes (P.1) ein zweiter Zeitpunkt (t2) bestimmt wird zum Ausgeben einer Warnung an den Fahrer in Abhängigkeit eines Warnsignals (SW1, SW3).

12. Verfahren nach Anspruch 10 oder 11, **dadurch gekennzeichnet, dass** eine akustische Warnung und ein optische oder eine haptische Warnung an den Fahrer ausgegeben wird.

13. Verfahren nach einem der Ansprüche 7 bis 12, **dadurch gekennzeichnet, dass** zum Durchführen der autonomen Notbremsung eine Fahrzeug-Soll-Verzögerung (zSoll) ermittelt wird, die in Abhängigkeit des ausgewählten Parametersatzes (P.1) zu einer Fahrzeug-Ist-Verzögerung (zlst) führt.

14. Verfahren nach einem der Ansprüche 9 bis 13, **dadurch gekennzeichnet, dass** die Zeitpunkte (t1, t2), der Notbremszeitpunkt (tN) sowie die Fahrzeug-Ist-Verzögerung (zlst) gesetzliche Vorgaben berücksichtigen.

15. Fahrzeug (1), insbesondere Nutzfahrzeug, mit einem Notbremssystem (6) nach einem der Ansprüche 1 bis 6, insbesondere zur Durchführung des Verfahrens nach einem der Ansprüche 7 bis 14.

## Claims

1. Emergency braking system (6) for a vehicle (1), in particular a commercial vehicle, wherein the emergency braking system (6) comprises an emergency brake control unit (7) for controlling the emergency braking system (6) on the basis of a parameter set (P.1),
**characterized in that**
a parameter set (P.1) can be selected by the emergency brake control unit (7) from a plurality of parameter sets (P.j) for controlling the emergency braking system (6),
wherein the plurality of parameter sets (P.j) are each assigned to a vehicle variant (V.j) and the respective parameter set (P.j) adapts the emergency braking system (6) to the respective vehicle variant (V.j),
wherein the vehicle variant (V.j) is **characterized by** a design of a braking system (2) of the respective vehicle variant (V.j) for adapting the emergency braking system (6) of the respective vehicle variant (V.j) to the design of the braking system (2) of this vehicle variant (V.j),
wherein a parameter set (P.1) is selected by the emergency brake control unit (7), which is assigned to the vehicle variant (V.1) which characterizes the current present vehicle (1).

2. The emergency braking system (6) according to claim 1, **characterized in that** the plurality of parameter sets (P.j) are stored on a memory unit (12) and the memory unit is connected to the emergency brake control unit (7).

3. The emergency braking system (6) according to claim 2, **characterized in that** the memory unit (12) is integrated in the emergency brake control unit (7).

4. The emergency braking system (6) according to any of the preceding claims, **characterized in that** the parameter sets (P.j) each have an identifier (X.j), wherein the identifier (X.j) characterizes the vehicle variant (V.j) for selecting a parameter set (P.j) adapted to the vehicle variant (V.j).

5. The emergency braking system (6) according to any of the preceding claims, **characterized in that** the design of the braking system (2) is **characterized by** a performance of the braking system (2), in particular a low performance, a normal performance or a very good performance, wherein the performance is in particular determined by a braking force.

6. The emergency braking system (6) according to any of the preceding claims, **characterized in that** the design of the braking system (2) is **characterized by** a design of the vehicle (1), in particular an axle configuration, for example a 4x2 axle configuration or a 6x2 axle configuration, or of a vehicle type, for example of a truck (1) or a tractor unit with a trailer or of a tractor or of a bus.

7. A method for controlling an emergency braking system (6), in particular according to any of claims 1 to 6, in a vehicle (1), in particular in a commercial vehicle, having at least the following steps:
selecting a parameter set (P.1) from a plurality of parameter sets (P.i), wherein the parameter sets (P.j) are each assigned to a vehicle variant (V.i) and the respective parameter set (P.j) adapts the emergency braking system (6) to the respective vehicle variant (V.j) and wherein the vehicle variant (V.j) is **characterized by** a design of a braking system (2) of the respective vehicle variant (V.j) for adapting the emergency braking system (6) of the respective vehicle variant (V.j) to the design of the braking system (2) of this vehicle variant (V.j),
wherein a parameter set (P.1) is selected, which is assigned to the vehicle variant (V.1), which characterize the current present vehicle (1) (St1);
determining a collision probability (K) on the basis of the selected parameter set (P.1) (St2); and
outputting warning signals (SW1, SW2, SW3) as well as emergency braking signals (S1) on the basis of the determined collision probability (K) (St3, St4, St5, St6).

8. The method according to claim 7, **characterized in that** the parameter set (P.1) is selected on the basis of a unique identifier (X.1) characterizing the current vehicle variant (V.1).

9. The method according to claim 7 or 8, **characterized in that**, on the basis of the selected parameter set (P.1) a time (tc) until a collision is determined and, on its basis, an emergency braking time (tN) is determined, at which the emergency braking signal (S1) for initiating an autonomous emergency braking is output.

10. The method according to claim 9, **characterized in that** on the basis of the emergency braking time (tN) and considering the selected parameter set (P.1), a first time (t1) is determined for outputting a warning to the driver on the basis of a warning signal (SW1, SW2).

11. The method according to claim 9 or 10, **characterized in that** on the basis of the emergency braking time (tN) and considering the selected parameter set, (P.1) a second time (t2) is determined for outputting a warning to the driver on the basis of a warning signal (SW1, SW3).

12. The method according to claim 10 or 11, **characterized in that** an acoustic warning and an optic or haptic warning is output to the driver.

13. The method according to any of claims 7 to 12, **characterized in that** a vehicle deceleration setpoint (zSoll) is determined for carrying out the autonomous emergency braking, which, on the basis of the selected parameter set (P.1), leads to a vehicle actual deceleration (zIst).

14. The method according to any of claims 9 to 13, **characterized in that** the times (t1, t2), the emergency braking time (tN) and the vehicle actual deceleration (zIst) observe legal requirements.

15. A vehicle (1), in particular a commercial vehicle, having an emergency braking system (6) according to any of claims 1 to 6, in particular for carrying out the method according to any of claims 7 to 14.

## Revendications

1. Système de freinage d'urgence (6) pour un véhicule (1), en particulier véhicule utilitaire, dans lequel le système de freinage d'urgence (6) présente une unité de commande de freinage d'urgence (7) pour la commande du système de freinage d'urgence (6) en fonction d'un ensemble de paramètres (P.1),
**caractérisé en ce que**
un ensemble de paramètres (P.1) pour la commande du système de freinage d'urgence (6) peut être sélectionné à partir de plusieurs ensembles de paramètres (P.j) par l'unité de commande de freinage d'urgence (7),
dans lequel les plusieurs ensembles de paramètres (P.j) sont associés respectivement à une variante de véhicule (V.j) et l'ensemble de paramètres (P.j) respectif adapte le système de freinage d'urgence (6) à la variante de véhicule (V.j) respective,
dans lequel la variante de véhicule (V.j) est **caractérisée par** une conception d'un système de freinage (2) de la variante de véhicule (V.j) respective pour l'adaptation du système de freinage d'urgence (6) de la variante de véhicule (V.j) respective à la conception du système de freinage (2) de cette variante de véhicule (V.j),
dans lequel un ensemble de paramètres (P.1), qui est associé à la variante de véhicule (V.1) qui caractérise le véhicule (1) actuellement situé devant, est sélectionné par l'unité de commande de freinage d'urgence (7).

2. Système de freinage d'urgence (6) selon la revendication 1, **caractérisé en ce que** les plusieurs ensembles de paramètres (P.j) sont mis en mémoire sur une unité mémoire (12) et l'unité mémoire est connectée à l'unité de commande de freinage d'urgence (7).

3. Système de freinage d'urgence (6) selon la revendication 2, **caractérisé en ce que** l'unité mémoire (12) est intégrée dans l'unité de commande de freinage d'urgence (7).

4. Système de freinage d'urgence (6) selon l'une quelconque des revendications précédentes, **caractérisé en ce que** les ensembles de paramètres (P.j) présentent respectivement une identification (X.j), dans lequel l'identification (X.j) caractérise la variante de véhicule (V.j) pour la sélection d'un ensemble de paramètres (P.j) adapté à la variante de véhicule (V.j).

5. Système de freinage d'urgence (6) selon l'une quelconque des revendications précédentes, **caractérisé en ce que** la conception du système de freinage (2) est **caractérisée par** une performance du système de freinage (2), en particulier une moindre performance, une performance normale ou une très bonne performance, dans lequel la performance est définie en particulier par une force de freinage.

6. Système de freinage d'urgence (6) selon l'une quelconque des revendications précédentes, **caractérisé en ce que** la conception du système de freinage (2) est **caractérisée par** un mode de construction du véhicule (1), en particulier une configuration d'essieu, par exemple une configuration d'essieu 4x2 ou une configuration d'essieu 6x2, ou d'un type de véhicule, par exemple d'un poids lourd (1) ou d'un tracteur routier avec remorque ou d'un tracteur ou d'un bus.

7. Procédé pour la commande d'un système de freinage d'urgence (6), en particulier selon l'une quelconque des revendications 1 à 6, dans un véhicule (1), en particulier véhicule utilitaire, avec au moins les étapes suivantes :
la sélection d'un ensemble de paramètres (P.1) à partir de plusieurs ensembles de paramètres (P.i), dans lequel les ensembles de paramètres (P.j) sont associés respectivement à une variante de véhicule (V.i) et l'ensemble de paramètres (P.j) respectif adapte le système de freinage d'urgence (6) à la variante de véhicule (V.j) respective et dans lequel la variante de véhicule (V.j) est **caractérisée par** une conception d'un système de freinage (2) de la variante de véhicule (V.j) respective pour l'adaptation du système de freinage d'urgence (6) de la variante de véhicule (V.j) respective à la conception du système de freinage (2) de cette variante de véhicule (V.j),
dans lequel un ensemble de paramètres (P.1) est sélectionné, qui est associé à la variante de véhicule (V.1) qui caractérise le véhicule (1) actuellement situé devant (St1) ;
détermination d'une probabilité de collision (K) en fonction de l'ensemble de paramètres (P.1) sélectionné (St2) ; et
délivrance de signaux d'avertissement (SW1, SW2, SW3) ainsi que de signaux de freinage d'urgence (S1) en fonction de la probabilité de collision (K) déterminée (St3, St4, St5, St6).

8. Procédé selon la revendication 7, **caractérisé en ce que** l'ensemble de paramètres (P.1) est sélectionné en fonction d'une identification (X.1) univoque caractérisant la variante de véhicule (V.1) actuelle.

9. Procédé selon la revendication 7 ou 8, **caractérisé en ce qu'**une période (tc) jusqu'à une collision est déterminée en fonction de l'ensemble de paramètres (P.1) sélectionné et en fonction de cela, un moment de freinage d'urgence (tN), auquel le signal de freinage d'urgence (S1) est délivré pour le déclenchement d'un freinage d'urgence autonome, est défini.

10. Procédé selon la revendication 9, **caractérisé en ce qu'**un premier moment (t1) est défini en fonction du moment de freinage d'urgence (tN) et avec prise en considération de l'ensemble de paramètres (P.1) sélectionné pour la délivrance d'un avertissement au conducteur en fonction d'un signal d'avertissement (SW1, SW2).

11. Procédé selon la revendication 9 ou 10, **caractérisé en ce qu'**un deuxième moment (t2) est défini en fonction du moment de freinage d'urgence (tN) et avec prise en considération de l'ensemble de paramètres (P.1) sélectionné pour la délivrance d'un avertissement au conducteur en fonction d'un signal d'avertissement (SW1, SW3).

12. Procédé selon la revendication 10 ou 11, **caractérisé en ce qu'**un avertissement acoustique et un avertissement optique ou un haptique est délivré au conducteur.

13. Procédé selon l'une quelconque des revendications 7 à 12, **caractérisé en ce que** pour la mise en œuvre du freinage d'urgence autonome, une décélération théorique de véhicule (zSoll) est déterminée, qui, en fonction de l'ensemble de paramètres (P.1) sélectionné, entraîne une décélération réelle de véhicule (zIst).

14. Procédé selon l'une quelconque des revendications 9 à 13, **caractérisé en ce que** les moments (t1, t2), le moment de freinage d'urgence (tN) ainsi que la décélération réelle de véhicule (zIst) prennent en considération des spécifications légales.

15. Procédé (1), en particulier véhicule utilitaire, avec un système de freinage d'urgence (6) selon l'une quelconque des revendications 1 à 6, en particulier pour la mise en œuvre du procédé selon les revendications 7 à 14.
